# EUROPÄISCHE PATENTSCHRIFT

(11) **EP 2 667 282 B1**
(45) Veröffentlichungstag und Bekanntmachung des Hinweises auf die Patenterteilung: **12.07.2017**
(21) Anmeldenummer: 12169464.0
(22) Anmeldetag: 25.05.2012
(51) Int. Cl.: G06F 1/18, H05K 7/14

(54) **Anordnung zur Aufnahme und Halterung einer Steckkarte in einem Gehäuse**
Assembly for holding and supporting a card in a housing
Agencement de réception et de fixation d'une carte de circuits imprimés enfichable dans un boîtier

(43) Veröffentlichungstag der Anmeldung: 27.11.2013
(73) Patentinhaber: Siemens Aktiengesellschaft, 80333 München (DE)
(72) Erfinder: Hirth, Joachim, 76135 Karlsruhe (DE)

(56) Entgegenhaltungen:
- US-A- 5 754 406
- US-A1- 2007 004 264
- US-A1- 2008 153 336

## Beschreibung

Die Erfindung betrifft eine Anordnung zur Aufnahme und Halterung einer Steckkarte in einem Gehäuse, wobei eine Kante der Steckkarte in eine im Gehäuse angeordnete Steckkartenführung oder mittels eines Steckverbinders der Steckkarte in einen dazu korrespondierenden im Gehäuse angeordneten Steckverbinder eingreift, wobei ein Haltearm in eine dieser ersten Kante gegenüberliegenden zweite Kante der Steckkarte einschiebbar ist und wobei zum Verschieben des Haltearms in Richtung der Steckkartenführung oder des Steckverbinders in einer im Gehäuse angeordneten Führung eine lösbare Klemmeinheit angeordnet ist.

Aus dem Siemens-Katalog ST 80 / ST PC, Kapitel 5, Ausgabe 2011 ist ein so genannter Industrie-PC bekannt, in dessen Steckplätze verschiedene Steckkarten steckbar sind. Diese Steckkarten, z. B. Steckkarten in Form von CPU-Steckkarten, Speichererweiterungs- oder Laufwerksanschaltsteckkarten, weisen unterschiedliche Längen auf, wodurch Maßnahmen für eine gute Halterung und Befestigung dieser Steckkarten erforderlich sind.

Eine Anordnung der eingangs genannten Art ist aus der
DE 10 2006 022 135 B4 bekannt. Dort ist ein Haltearm zur Fixierung einer oder mehrerer Steckkarten in Form von so genannten Slotkarten vorgesehen, wobei der Haltearm mittels am Gehäuse des Computers eingeschraubter Schraubpfeiler derart angeordnet ist, dass der Haltearm die Slotkarten gleicher Länge bzw. Höhe fixiert.

Eine Anordnung der eingangs genannten Art ist aus der
US 5,754,405 bekannt.

Der vorliegenden Erfindung liegt die Aufgabe zugrunde, eine Anordnung der eingangs genannten Art zu schaffen, in welcher die Steckkarte einfach fixiert sowie einfach montiert und demontiert werden kann.

Diese Aufgabe wird dadurch gelöst, dass zum Verschieben des Haltearms in Richtung der Steckkartenführung oder des Steckverbinders in einer im Gehäuse angeordneten Führung eine lösbare Klemmeinheit angeordnet ist, und dass die Klemmeinheit zwei über Spreizarme verbundene Teile umfasst, die derart zueinander verschiebbar sind, dass die Spreizarme die Klemmeinheit in der Führung festklemmen.

Vorteilhaft ist, dass der Haltearm einfach mittels der Klemmeinheit festgeklemmt werden kann, wodurch die Steckkarte zwischen der im Gehäuse angeordneten Steckkartenführung oder des im Gehäuse angeordneten Steckverbinders einerseits und dem Haltearm andererseits einfach befestigt werden kann. Senkrecht zur Steckkarte bewirkte Auslenkungen, beispielsweise aufgrund von auf das Gehäuse einwirkenden Erschütterungen, werden vermieden.

In einer Ausgestaltung der Erfindung ist vorgesehen, dass eines dieser Teile der Klemmeinheit eine Bohrung zur Durchführung einer Schraube und das andere Teil der Klemmeinheit ein Innengewinde aufweist. Ein einfaches Festklemmen und Lösen der Klemmeinheit wird durch eine geringfügige Umdrehung der Schraube bewirkt, die in Steckrichtung der Steckkarte parallel zu dieser in der Klemmeinheit angeordnet ist.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: einen Ausschnitt eines elektrischen Gerätes,
- Figur 2: einen Haltearm mit einer Klemmeinheit und
- Figur 3: eine Klemmeinheit.

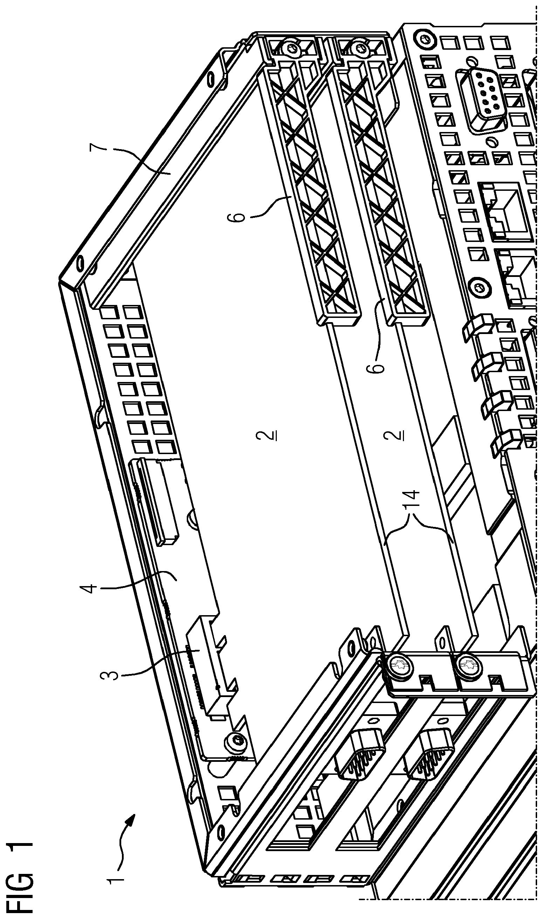

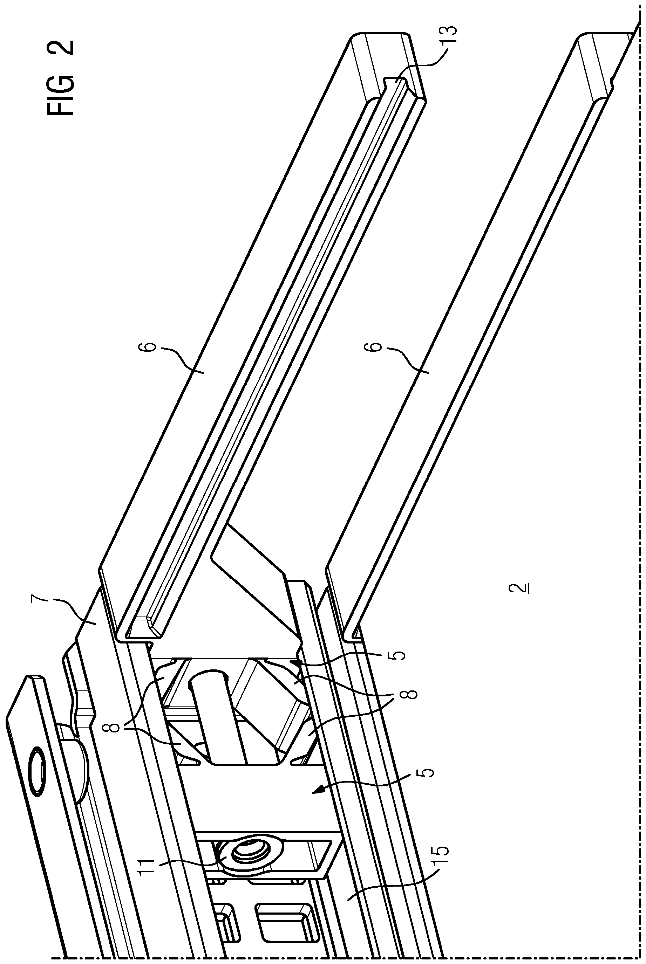

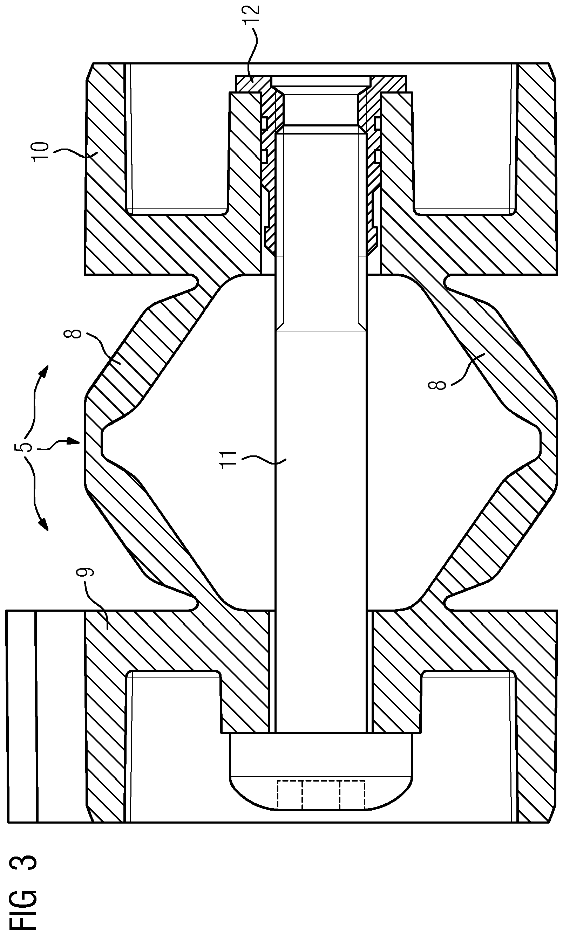

Die in den Figuren 1 bis 3 dargestellten gleichen Teile sind mit gleichen Bezugszeichen versehen.

In Figur 1 ist mit 1 ein Gehäuse eines elektrischen Gerätes in Form eines Industrie-PCs bezeichnet, der zur besseren Übersicht ohne Abdeckung, ohne Bedieneingabe-Einheiten, z. B. Bedieneingabe-Einheiten in Form einer Tastatur und/oder einer Maus, oder eines Bildwiedergabegerätes dargestellt ist. Im Gehäuse 1 sind so genannte PCI-Steckkarten 2 angeordnet, die in im Gehäuse 1 angeordnete Steckverbinder 3 gesteckt sind. Diese Steckverbinder 3 können Bestandteile einer Platine 4 sein, z. B. eines so genannten Motherboards des Industrie-PCs. Weitere Bestandteile des Industrie-PCs, wie beispielsweise Disketten- oder Festplatten-Laufwerke, Netzteil oder sonstige für den Betrieb des Rechners geeignete Hardwaremittel, sind für die Erfindung ohne Bedeutung und werden daher nicht erläutert.

Um die Steckkarten 2 unabhängig voneinander einfach montieren sowie einfach fixieren zu können, ist für jede dieser Steckkarten 2 ein mit einer Klemmeinheit 5 versehener Haltearm 6 vorgesehen. Jede Klemmeinheit 5, welche im Wesentlichen senkrecht zu dem jeweiligen Haltearm 6 angeordnet ist, ist in einer U-förmigen Führung 7 in Richtung des Steckverbinders 3 verschiebbar und kann mittels Spreizarme 8 der Klemmeinheit 5 in dieser Führung 7 festgeklemmt werden. Dazu sind die jeweiligen Klemmeinheiten 5 mit zueinander verschiebbaren Teilen 9, 10 versehen, von denen ein Teil 9 eine Bohrung zur Durchführung einer Schraube 11 und das andere Teil 10 ein Innengewinde 12 zum Einschrauben der Schraube 11 aufweist, wobei das Innengewinde 12 als integraler Bestandteil des Teils 10 ausgebildet sein kann. Aufgrund einer derartigen Fixierung werden senkrecht zu den Steckkarten 2 bewirkte Auslenkungen weitgehend vermieden.

Die Steckkarten 2 werden in der Art und Weise in das Gehäuse 1 eingebaut, indem ein Anwender zunächst die jeweilige Steckkarte 2 mit ihrem Steckverbinder in den dazu korrespondierenden Steckverbinder 3 der Platine 4 steckt, anschließend den Haltearm 6 in Richtung dieses Steckverbinders 3 soweit verschiebt bis eine Nut 13 des Haltearms 6 in eine Kante 14 der Steckkarte 2 eingreift und schließlich den Haltearm 4 in dieser Position mittels der Klemmeinheit 5 festklemmt. Das Festklemmen der jeweiligen Klemmeinheit 5 und damit des jeweiligen Haltearms 6 wird durch eine geringfügige Umdrehung der Schraube 11 bewirkt, wodurch die Teile 9, 10 sich zueinander bewegen und sich dadurch die Spreizarme 8 in Richtung Außenwände 15 der Führung 7, die integraler Bestandteil des Gehäuses 1 sein kann, spreizen.

Um die Steckkarten 2 wieder demontieren zu können, löst der Anwender zunächst die jeweilige Klemmeinheit 5, indem er die Schraube 11 wieder zurückdreht. Ist die Klemmeinheit 5 gelöst, kann der Haltearm 6 in entgegengesetzter Montagerichtung verschoben und schließlich die Steckkarte 2 aus dem Steckverbinder 3 herausgezogen werden.

Die Erfindung lässt sich somit wie folgt zusammenfassen: Eine Anordnung zur Aufnahme und Halterung einer Steckkarte 2 in einem Gehäuse 1, wobei eine Kante der Steckkarte 2 in eine im Gehäuse 1 angeordnete Steckkartenführung oder mittels eines Steckverbinders der Steckkarte 2 in einen dazu korrespondierenden im Gehäuse angeordneten Steckverbinder 3 eingreift und wobei ein Haltearm 6 in eine dieser ersten Kante gegenüberliegende zweite Kante 14 der Steckkarte 2 einschiebbar ist, zeichnet sich dadurch aus,
- dass zum Verschieben des Haltearms 6 in Richtung der Steckkartenführung oder des Steckverbinders 3 in einer im Gehäuse 1 angeordneten Führung 7 eine lösbare Klemmeinheit 5 angeordnet ist, und
- dass die Klemmeinheit 5 zwei über Spreizarme 8 verbundene Teile 9, 10 umfasst, die derart zueinander verschiebbar sind, dass die Spreizarme 8 die Klemmeinheit 5 in der Führung 7 festklemmen.

## Patentansprüche

1. Anordnung zur Aufnahme und Halterung einer Steckkarte (2) in einem Gehäuse (1), wobei eine Kante der Steckkarte (2) in eine im Gehäuse (1) angeordnete Steckkartenführung oder mittels eines Steckverbinders der Steckkarte (2) in einen dazu korrespondierenden im Gehäuse angeordneten Steckverbinder (3) eingreift, wobei ein Haltearm (6) in eine dieser ersten Kante gegenüberliegende zweite Kante (14) der Steckkarte (2) einschiebbar ist und wobei zum Verschieben des Haltearms (6) in Richtung der Steckkartenführung oder des Steckverbinders (3) in einer im Gehäuse (1) angeordneten Führung (7) eine lösbare Klemmeinheit (5) angeordnet ist, **dadurch gekennzeichnet,**
**dass** die Klemmeinheit (5) zwei über Spreizarme (8) verbundene Teile (9, 10) umfasst, die derart zueinander verschiebbar sind, dass die Spreizarme (8) die Klemmeinheit (5) in der Führung (7) festklemmen.

2. Anordnung nach Anspruch 1, **dadurch gekennzeichnet, dass** eines dieser Teile (9) der Klemmeinheit (5) eine Bohrung zur Durchführung einer Schraube (11) und das andere Teil (10) der Klemmeinheit (5) ein Innengewinde (12) aufweist.

3. Elektronisches Gerät, insbesondere Personalcomputer, mit mindestens einer Anordnung nach Anspruch 1 oder 2.

## Claims

1. Assembly for holding and supporting a plug-in card (2) in a housing (1), wherein an edge of the plug-in card (2) engages into a plug-in card guide disposed in the housing (1) or, by means of a plug-in connector of the plug-in card (2), into a plug-in connector (3) corresponding thereto disposed in the housing, wherein a retaining arm (6) can be inserted into a second edge (14), which is opposite this first edge, of the plug-in card (2) and wherein a releasable clamping unit (5) is disposed in a guide (7) disposed in the housing (1) for displacing the retaining arm (6) in the direction of the plug-in card guide or the plug-in connector (3), **characterised in that** the clamping unit (5) comprises two parts (9, 10) which are connected via spreader arms (8) and can be displaced with respect to one another, and that the spreader arms (8) clamp the clamping unit (5) in the guide (7).

2. Assembly according to claim 1, **characterised in that** one of these parts (9) of the clamping unit (5) has a hole through which a screw (11) passes and the other part (10) of the clamping unit (5) has an internal thread (12).

3. Electronic device, in particular personal computer, with at least one assembly according to claim 1 or 2.

## Revendications

1. Agencement de réception et de fixation d'une carte ( 2 ) à enficher dans un boîtier ( 1 ), un bord de la carte ( 2 ) à enficher pénétrant dans un guidage de carte à enficher disposé dans le boîtier ( 1 )ou dans un connecteur ( 3 ) d'enfichage y correspondant et monté dans le boîtier, dans lequel un bras ( 6 ) de fixation peut être inséré dans un deuxième bord ( 14 ), opposé à ce premier bord de la carte ( 2 ) à enficher, et dans lequel, pour déplacer le bras ( 6 ) de fixation dans la direction du guidage de carte à enficher ou du connecteur ( 3 ) d'enfichage, dans un guidage ( 7 ) disposé dans le boîtier ( 1 ), il est monté une unité ( 5 ) de pincement amovible, **caractérisé en ce que** l'unité ( 5 ) de pincement comprend deux parties ( 9, 10 ) reliées par des bras ( 8 ) d'écartement, qui peuvent être déplacés l'un par rapport à l'autre, de manière à ce que les bras ( 8 ) d'écartement pincent l'unité ( 5 ) de pincement dans le guidage ( 7 ).

2. Agencement suivant la revendication 1, **caractérisé en ce que** l'une de ces parties ( 9 ) de l'unité ( 5 ) de pincement a un trou de passage d'une vis ( 11 ) et l'autre partie ( 10 ) de l'unité ( 5 ) de pincement, un taraudage ( 12 ).

3. Appareil électronique, notamment ordinateur personnel, comprenant au moins un agencement suivant la revendication 1 ou 2.
